(19) Europäisches Patentamt
European Patent Office
Office européen des brevets

(11) **EP 2 056 590 B1**

(12) **FASCICULE DE BREVET EUROPEEN**

(45) Date de publication et mention
de la délivrance du brevet:
**09.04.2014 Bulletin 2014/15**

(51) Int Cl.:
***H04N 5/232*** *(2006.01)*

(21) Numéro de dépôt: **08305730.7**

(22) Date de dépôt: **27.10.2008**

(54) **Procédé de lecture d'une matrice bidimensionnelle de pixels et dispositif pour la mise en oeuvre d'un tel procédé**

Verfahren und Vorrichtung zum Pixelsauslesen aus einer bidimensionalen Matrix

Method and device for reading out pixels of a bidimensional matrix

(84) Etats contractants désignés:
**AT BE BG CH CY CZ DE DK EE ES FI FR GB GR HR HU IE IS IT LI LT LU LV MC MT NL NO PL PT RO SE SI SK TR**

(30) Priorité: **05.11.2007 FR 0758792**

(43) Date de publication de la demande:
**06.05.2009 Bulletin 2009/19**

(73) Titulaire: **Commissariat à l'Énergie Atomique et aux Énergies Alternatives 75015 Paris (FR)**

(72) Inventeur: **Verdant, Arnaud 38110 LA TOUR DU PIN (FR)**

(74) Mandataire: **Vuillermoz, Bruno Cabinet Laurent & Charras "Le Contemporain" 50, Chemin de la Bruyère 69574 Dardilly Cédex (FR)**

(56) Documents cités:
**WO-A-02/089467          WO-A-2004/107728
JP-A- 2004 007 089     US-A- 5 257 058
US-A- 5 703 639          US-A1- 2004 095 492
US-A1- 2005 243 183   US-A1- 2006 119 903
US-A1- 2006 227 228   US-B1- 6 366 317
US-B1- 7 106 374**

**Description**

**DOMAINE DE L'INVENTION**

L'invention se rapporte au domaine général de la lecture d'un détecteur d'imagerie en sous-résolution, notamment dans le cadre de la détection et du suivi de cibles dans un flux d'images en provenance dudit capteur.

Plus particulièrement, la présente invention concerne un procédé et un dispositif de lecture d'une matrice bidimensionnelle de pixels d'un détecteur, dans lesquels la matrice de pixels est organisée en blocs de pixels constituant des macropixels, chaque macropixel pouvant être lu selon un mode de haute résolution et/ou un mode de basse résolution.

**ETAT ANTERIEUR DE LA TECHNIQUE**

Lors d'une application de détection ou dans le cadre du suivi d'objets en mouvement par une caméra numérique, il est usuel d'utiliser un mode de lecture du capteur dont elle est muni dit de « sous résolution ».

Par mouvement, on entend des variations rapides et importantes de luminosité d'une partie de l'image, induites, entre autre, par un objet du monde réel effectivement en mouvement ou par la variation de luminosité d'une source de lumière, comme un feu clignotant par exemple.

Ce type de lecture dit en « sous résolution » consiste à découper la matrice bidimensionnelle d'éléments photosensibles de la caméra ou pixels, en blocs (on parle alors de « macropixels ») et à lire tous les pixels des macropixels (on parle alors d'une lecture en mode de haute résolution) d'une zone prédéfinie de la matrice comprenant l'objet en mouvement. Les autres macropixels sont alors lus dans un mode de basse résolution, consistant par exemple à ne lire qu'un pixel par macropixel.

Ce mode mixte de lecture, à savoir une lecture en haute résolution des macropixels d'intérêt, et une lecture en basse résolution des autres macropixels, a ainsi pour effet de diminuer sensiblement la quantité de données à traiter. On observe donc une consommation d'énergie réduite ainsi qu'un besoin amoindri en ressources de calcul.

Un tel mode de lecture est par exemple décrit le document US-A-2004/0095492. Dans ce document, la haute résolution est appliquée sur un objet ciblé. Par exemple, un mode de détection permet la recherche d'un spot lumineux dans l'image et détermine les éléments de celle-ci à lire en haute et basse résolution. La mise à jour de la zone de haute résolution est alors déterminée par une analyse du mouvement sur la base des pixels lus en mode de haute résolution.

Le document US-A-20061119903 divulgue un procédé de lecture d'une matrice bidimensionnelle de pixels d'un détecteur organisée en blocs de pixels formant macropixels, chaque macropixel pouvant être lu indépendamment l'un de l'autre selon un mode de haute resolution et/ou un mode de basse resolution.

Le document JP-A-2004007098 concerne la détection de nouveaux objets dans une scène par la mise en oeuvre d'une différence entre des images acquises à des instants différents.

Le document US-B-7106374 décrit un capteur dont la matrice de pixels peut être lue en mode de basse et en mode de haute résolution pour suivre des objets en mouvement.

La détection ou le suivi d'objets en mouvement trouve particulièrement application dans le domaine de la vision infrarouge au moyen d'une caméra numérique à détecteur bolométrique. En effet, l'utilisation d'une telle caméra, sensible aux infrarouges, permet une surveillance de lieux, comme des parkings par exemple, indépendamment de la période de la journée, à la différence des détecteurs visibles qui nécessitent des scènes suffisamment éclairées.

Les détecteurs bolométriques sont des dispositifs agencés sous forme matricielle, et susceptibles de fonctionner à température ambiante, c'est-à-dire ne nécessitant pas de refroidissement à de très basses températures.

Ces détecteurs non refroidis utilisent traditionnellement la variation d'une grandeur physique d'un matériau approprié, en fonction de la température, au voisinage de 300K. Dans le cas des détecteurs bolométriques, cette grandeur physique est la résistivité électrique.

Les détecteurs destinés à l'imagerie infrarouge sont classiquement réalisés sous la forme d'une matrice de détecteurs élémentaires, ou bolomètres, ladite matrice étant suspendue au dessus d'un substrat, généralement réalisé en silicium, via des bras de soutien.

Il est usuellement ménagé dans le substrat des moyens d'adressage séquentiel des détecteurs élémentaires et des moyens d'excitation électrique et de prétraitement des signaux électriques générés par ces détecteurs élémentaires. Ce substrat et les moyens intégrés sont communément désignés par le terme « circuit de lecture ».

Or, on observe que les bolomètres présentent une dispersion de leur réponse, dispersion qui, en outre, s'accentue ou varie avec le temps.

Ainsi, l'image d'une scène uniforme par un détecteur bolométrique n'est généralement pas une image uniforme. On parle alors dans ce cas d'une dispersion d'« offset ». De même on observe une dispersion dans les gains des bolomètres, l'image par le détecteur bolométrique d'une variation uniforme d'une scène uniforme n'étant pas uniforme.

Les raisons d'une telle dispersion sont multiples, mais on peut notamment citer l'illumination du détecteur par un flux élevé, comme par exemple lors de l'observation d'une source de rayonnement intense (soleil, projecteur,...), qui fait apparaître un phénomène de rémanence durable, dommageable pour la qualité des images thermiques délivrées par le détecteur.

On peut également mentionner le fait que, parmi un même lot de bolomètres d'imagerie, il existe une dispersion naturelle des résistances électriques plus ou moins prononcée en fonction du procédé et des matériaux utilisés pour la fabrication de ceux-ci. De fait, un détecteur comporte dès sa mise en service une dispersion spatiale de ses caractéristiques de détection.

Or, un écart de 1 % de la résistance électrique d'un bolomètre d'imagerie par rapport à une résistance de référence induit une erreur de l'ordre de 10 à 20% sur la température de la scène estimée au travers de celui-ci.

Comme par ailleurs, la valeur du signal utile ne représente usuellement qu'environ 10% de la dynamique totale du détecteur bolométrique, on comprend aisément que la dispersion des caractéristiques de détection du détecteur bolométrique nuit grandement à la qualité de détection.

Généralement, on observe qu'une image non corrigée d'un détecteur bolométrique est difficilement exploitable visuellement.

**EXPOSE DE L'INVENTION**

Le but de la présente invention est de résoudre le problème susmentionné en proposant un procédé de lecture en sous-résolution d'une matrice de détecteurs qui élimine sensiblement l'effet de la dispersion des caractéristiques de détection desdits détecteurs, permettant ainsi une exploitation facilitée des images issues des détecteurs, voire une exploitation visible de ces images.

A cet effet, l'invention a pour objet un procédé de lecture d'une matrice bidimensionnelle de pixels d'un détecteur, ladite matrice étant organisée en blocs de pixels formant macropixels, chaque macropixel pouvant être lu indépendamment l'un de l'autre selon un mode de haute résolution et/ou un mode de basse résolution.

Selon l'invention, le procédé comporte les étapes consistant à :

■ lors de la sélection du mode de lecture en haute résolution pour un macropixel, lire et mémoriser les valeurs des pixels de celui-ci, de manière à définir un macropixel de référence ;
■ lors de cycles de lecture suivants en haute résolution de ce macropixel, former la différence entre les valeurs lues des pixels de celui-ci et les valeurs de pixels correspondantes du macropixel de référence.

Par pixel, on entend ici le composant élémentaire de détection constitutif de la matrice de détection, par exemple un bolomètre dans le cas d'un détecteur bolométrique ou une photodiode dans le cas d'un détecteur visible.

En d'autres termes, un macropixel acquis en haute résolution est corrigé par la valeur des ces pixels acquis à l'instant de l'activation du mode de lecture de haute résolution.

Si l'on considère la valeur $P_0$ d'un pixel de ce macropixel à cet instant, cette valeur est composée d'un signal utile $p_0$ et d'une valeur $D_0$ non utile, considérée comme du bruit. En d'autres termes, on a l'expression : $P_0 = p_0 + D_0$.

Lors d'un cycle de lecture ultérieur, par exemple à l'instant n, la valeur corrigée $P_n^c$ de ce même pixel est alors égale à

$$P_n^c = P_n - P_0 = (p_{0+n} + D_{0+n}) - (p_0 + D_0), \quad \text{où}$$

$p_n$ et $D_n$ sont le signal utile et le bruit à l'instant n respectivement.

Comme la constante de temps du bruit $D$ est essentiellement celle des dispersions de la réponse des pixels, c'est-à-dire essentiellement la température ambiante dans le cas d'un détecteur bolométrique, on observe que pour l'essentiel des scènes observées (par exemple un parking avec un piéton ou une voiture se déplaçant), la variation du bruit $D$ est sensiblement négligeable pendant la durée de lecture du macropixel en haute résolution. On observe ainsi que la valeur $D_n$ du bruit à l'instant n est généralement sensiblement égale à la valeur $D_0$ à l'instant de l'activation de la lecture en haute résolution.

En conséquence, la valeur de pixel corrigée $P_n^c$ est sensiblement égale à $P_n^c = p_{0+n} - p_0$.

Ainsi, les valeurs corrigées du macropixel lu en haute résolution sont sensiblement indépendantes de la dispersion des caractéristiques de détection des pixels formant ce macropixel.

Selon un mode de réalisation particulier de l'invention, la mémorisation du macropixel de référence et la formation de la différence sont mises en oeuvre sous forme analogique. De préférence, le procédé comporte une étape de conversion analogique/numérique des valeurs lues des macropixels, mise en oeuvre consécutivement à l'étape de formation de la différence.

En d'autres termes, la correction est effectuée de manière analogique, avant toute conversion analogique/numérique des valeurs du macropixel. Ceci permet notamment une correction rapide et par exemple la mise en oeuvre d'une conversion analogique/numérique de dynamique adaptée à celle de la différence, et donc une dynamique moins importante que celle adaptée à la valeur brute du pixel. Des économies d'énergie peuvent ainsi être réalisées.

Selon un mode de réalisation préféré de l'invention, la lecture en mode de haute résolution d'un macropixel est sélectionnée lorsqu'un mouvement est détecté dans celui-ci ou qu'un mouvement est détecté dans un macropixel voisin.

Grâce à la lecture en mode de haute résolution d'un voisinage d'un macropixel dans lequel un mouvement a été détecté, les objets « fantômes » et les phénomènes de traînées sont ainsi évités.

L'invention a également pour objet un dispositif de lecture d'une matrice bidimensionnelle de pixels d'un détecteur, ladite matrice étant organisée en blocs de pixels formant macropixels, le dispositif comportant des moyens aptes à lire chaque macropixel selon un mode de haute résolution et/ou un mode de basse résolution.

Selon l'invention, ce dispositif comporte :

■ des moyens aptes à mémoriser les valeurs des pixels d'un macropixel, lorsque le mode de lecture en haute résolution est sélectionné pour celui-ci, de manière à définir un macropixel de référence ; et
■ des moyens de formation de la différence entre les valeurs lues des pixels de ce macropixel et les valeurs de pixels correspondantes du macropixel de référence.

Ce dispositif est adapté pour mettre en oeuvre le procédé précité.

Selon des modes de réalisation particuliers, les moyens de mémorisation et de formation de la différence sont réalisés sous forme analogique. De préférence, le dispositif comporte des moyens de conversion analogique/numérique de la différence formée.

**BREVE DESCRIPTION DES FIGURES**

L'invention sera mieux comprise à la lecture de la description qui suit, donnée uniquement à titre d'exemple, et réalisée avec les dessins annexés dans lesquels :

- la figure 1 est une vue schématique d'un système de suivi de cible selon l'invention ;
- la figure 2 est un organigramme d'un procédé selon l'invention ; et
- les figures 3 et 4 sont des exemples d'images avant et après correction selon le procédé de l'invention.

**DESCRIPTION DETAILLEE DE L'INVENTION**

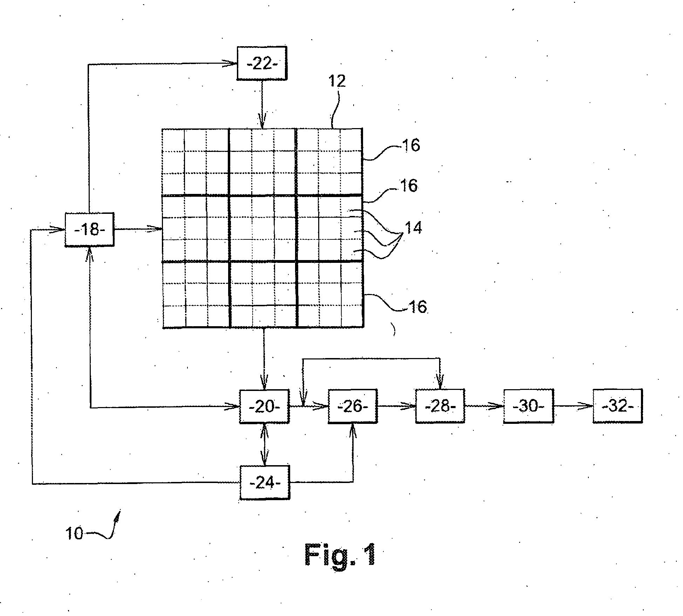

Sur la figure 1, on a illustré sous la référence générale **10** un système de suivi et de détection d'objets en mouvement dans un flux d'images délivrées par une matrice bidimensionnelle de bolomètres **12,** ou pixels.

La matrice de pixels **12** comprend n lignes et m colonnes de pixels **14** et est subdivisée en N lignes et M colonnes de blocs identiques **16** de pixels, ou macropixels, où n, m, N et M sont des entiers positifs prédéterminés. Par exemple, les macropixels présentent chacun des dimensions de 3 pixels par 3 pixels ou de 5 pixels par 5 pixels.

Dans ce qui suit, il sera considéré, à titre d'exemple, une matrice de 9 pixels par 9 pixels avec des macropixels de 3 pixels par 3 pixels.

Le système **10** comporte un circuit d'adressage **18** apte à adresser la matrice **12,** ligne de macropixels par ligne de macropixels.

Le système **10** comporte également un circuit de lecture **20** apte à lire chaque macropixel d'une ligne de macropixels adressée par le circuit **18** dans un mode de haute ou de basse résolution. Plus particulièrement, la lecture en mode de basse résolution d'un macropixel consiste pour le circuit de lecture **20** à lire la moyenne spatiale des pixels qui composent celui-ci.

A cet effet, le système **10** peut comporter un circuit d'équirépartition de charge **22** (plus connu sous l'expression anglo-saxonne « *binning* »), sous le contrôle du circuit d'adressage **18,** et mettant en oeuvre un moyennage spatial des valeurs brutes des pixels d'un macropixel avant la lecture de celui-ci en mode de basse résolution. Par exemple le circuit d'équirépartition de charge **22** est conforme aux enseignements du document US-A-2004/0095492. Un circuit d'équirépartition de charges est plus particulièrement adapté à un détecteur comprenant des photodiodes telles que celles utilisées pour détecter la lumière visible.

Dans le cas d'un détecteur comprenant des bolomètres, on pourra utiliser un circuit **22** apte à lire une moyenne de courants traversant plusieurs bolomètres , tel qu'un circuit décrit dans un article de Coulombe J intitulé « Variable resolution CMOS current mode active pixel sensor », Circuits and Systems, Proceedings. ISCAS 2000 Geneva, IEEE, Volume 2, 28-31 May 2000 Page(s):293 - 296 vol.2.

Le circuit de lecture **20** est par ailleurs connecté au circuit d'adressage **18** pour une synchronisation de l'adressage et de la lecture des lignes de macropixels mis en oeuvre par ces deux circuits.

Un circuit d'analyse et de cadencement **24** est en outre connecté aux circuits d'adressage et de lecture **18, 20.** Ce circuit **24** commande le cadencement de l'adressage en délivrant au circuit **18** l'adresse de la ligne de macropixels à lire.

Le circuit **24** analyse également, pour chaque macropixel, le résultat de la lecture en basse résolution de celui-ci et commande en conséquence les circuits d'adressage et de lecture **18, 20** pour une lecture en basse ou haute résolution du macropixel.

Plus particulièrement, le circuit d'analyse et de cadencement **24** active la lecture en haute résolution d'un macropixel lorsqu'une variation de sa moyenne spatiale entre deux lectures successives de celui-ci est supérieure ou égale à une valeur de seuil prédéterminée, par exemple une valeur de seuil égale à 2% de la dynamique totale des pixels, ou bien une valeur de seuil calculée selon une technique de seuillage adaptatif.

De même, le circuit d'analyse et de cadencement **24** désactive, le cas échéant, la lecture en haute résolution du macropixel lorsque cette même variation est inférieure à ladite valeur de seuil.

Le circuit d'analyse et de cadencement **24** commande également les circuits d'adressage et de lecture **18, 20** pour activer la lecture en mode de haute résolution de macropixels au voisinage de macropixels dont la lecture en mode de haute résolution a été activée en raison d'une variation de leur moyenne spatiale supérieure à la valeur seuil. Par exemple, pour chacun de ces macropixels, un voisinage de 3 par 3 macropixels ou de 5 par 5 macropixels est lu en mode de haute résolution.

Le système **10** comporte également un circuit de mémorisation **26,** connecté au circuit de lecture **20** et commandé par le circuit d'analyse **24.** Lors de l'activation de la lecture en haute résolution d'un macropixel, le circuit d'analyse et de cadencement **24** commande le circuit de mémorisation **26** pour que ce dernier mémorise les valeurs des pixels de macropixel lues par le circuit de lecture **20** la première fois après cette activation.

Le circuit **26** de mémorisation garde donc en mémoire la valeur de chacun des macropixels lors de leur dernière activation en mode de haute résolution, formant ainsi une matrice de macropixels de référence utilisée ultérieurement pour la correction de la lecture en haute résolution.

Le système **10** comprend également un circuit **28** analogique de soustraction, connecté au circuit de lecture **20** et au circuit de mémorisation **26.** Pour chaque macropixel lu en haute résolution, le circuit **28** de soustraction forme la différence entre les valeurs des pixels de ce macropixel lues par le circuit de lecture **20** et les valeurs correspondantes mémorisées dans le circuit **26.**

Il est ainsi obtenu, pour chaque macropixel lu en haute résolution, une valeur de celui-ci égale à la différence entre sa valeur brute, c'est-à-dire lue par le circuit de lecture **20,** et sa valeur de référence mémorisée dans le circuit **28.**

De préférence, le circuit **26** est formé d'un banc de condensateurs, par exemple de dimensions égales à celles de la matrice **12,** et le circuit **28** de soustraction est réalisé sous forme analogique. Ainsi, la correction des macropixels lus en haute résolution est réalisée entièrement en analogique.

Le système **10** comporte enfin un convertisseur analogique/numérique **30** connecté à la sortie du circuit de soustraction **28** et numérisant la différence formée par celui-ci, pour des besoins ultérieurs, par exemple en traitement d'image.

Un dispositif périphérique **32** (écran, mémoire, etc) peut également être prévu pour la visualisation et/ou la mémorisation de la différence numérisée.

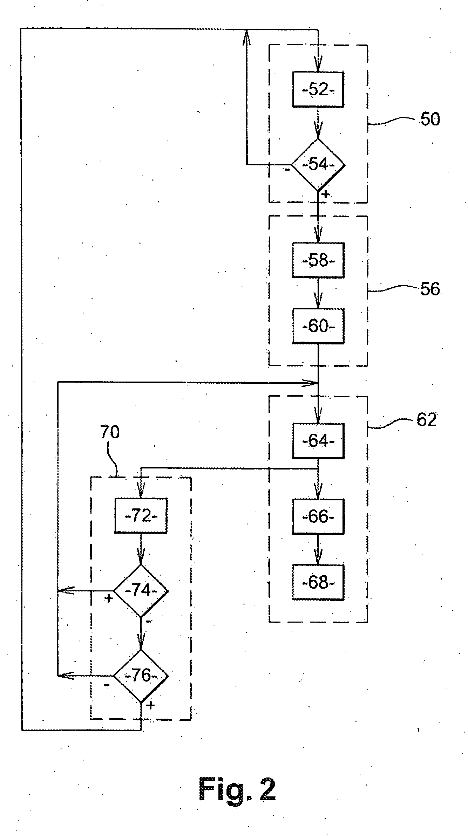

Un organigramme du procédé mis en oeuvre par le système venant d'être décrit est illustré à la figure 2. Cet organigramme concerne la lecture d'un macropixel particulier, la lecture des autres macropixels étant identique.

Une première étape du procédé selon l'invention est une étape **50** de lecture basse résolution du macropixel.

Cette étape **50** comprend une sous-étape **52** dans laquelle le macropixel est lu en basse résolution, c'est-à-dire qu'il est réalisé une moyenne spatiale des valeurs de ses pixels, puis la lecture d'une valeur d'un pixel de celui-ci.

Lors d'une sous-étape **54** suivante, un test est mis en oeuvre pour déterminer si une condition pour lire ce macropixel en haute résolution est satisfaite. Cette condition est notamment satisfaite si la valeur absolue de la différence entre la valeur de basse résolution du macropixel venant d'être lue et la valeur de basse résolution préalablement mémorisée est supérieure à la valeur de seuil, auquel cas un mouvement est détecté dans le macropixel. Cette condition est également satisfaite si le macropixel appartient à un voisinage d'un macropixel dans lequel un mouvement a été détecté.

Si tel n'est pas le cas, la sous-étape **54** reboucle sur la sous-étape **52** afin de continuer à scruter l'occurrence de la satisfaction de la condition d'activation du mode de lecture en haute résolution.

Si le test mis en oeuvre lors de la sous-étape **54** est positif, l'étape **50** de basse résolution se poursuit par une étape **56** d'initialisation de correction.

Cette étape **56** d'initialisation comprend une sous-étape de lecture en haute résolution du macropixel, c'est-à-dire une lecture de tous ses pixels, suivie d'une sous-étape **60** de mémorisation des valeurs de pixel lues, formant ainsi un macropixel de référence.

Une fois l'étape **56** d'initialisation terminée, une étape **62** de lecture du macropixel en mode de haute résolution avec correction du bruit de celui-ci est alors déclenchée.

Cette étape **62** comporte une sous-étape **64** de lecture du macropixel en mode de haute résolution. La sous-étape **64** est alors suivie d'une sous-étape **66** dans laquelle il est formé la différence entre les valeurs des pixels venant d'être lues et les valeurs des pixels correspondantes du macropixel de référence mémorisé en **60.**

L'étape **62** de lecture en mode de haute résolution avec correction se poursuit alors par une sous-étape **68** de conversion de la différence ainsi formée en un macropixel numérique.

Parallèlement, une étape **70** de vérification de la satisfaction de la condition d'activation du mode de lecture en haute résolution est déclenchée à la suite de la sous-étape **64** de lecture en mode de haute résolution du macropixel.

Cette étape **70** comprend une sous-étape de lecture du macropixel en mode de basse résolution identique à la sous-étape **62,** et une sous-étape de **74** consistant à tester si la condition de lecture en haute résolution est toujours satisfaite, la sous-étape **74** étant identique à la sous-étape **54.**

Si le résultat du test mis en oeuvre en **74** est positif, la sous-étape **74** boucle sur l'étape **62** pour une nouvelle lecture en mode de haute résolution avec correction.

Sinon, la sous-étape **74** se poursuit par une sous-étape **76** dans laquelle il est testé si le macropixel doit être lu en mode de basse résolution. Plus particulièrement, il est testé en **76** si au moins un macropixel voisin du macropixel est en cours de lecture de haute résolution à la suite de la détection d'un mouvement dans celui-ci.

Si tel est le cas, la lecture dans le mode de haute résolution du macropixel se poursuit par le bouclage de la sous-étape **76** sur l'étape **62.**

Si tel n'est pas le cas, c'est-à-dire qu'aucun mouvement n'a été détecté dans le voisinage du macropixel, la lecture en mode de basse résolution de celui-ci est activée par le bouclage de la sous-étape **76** sur l'étape **50.**

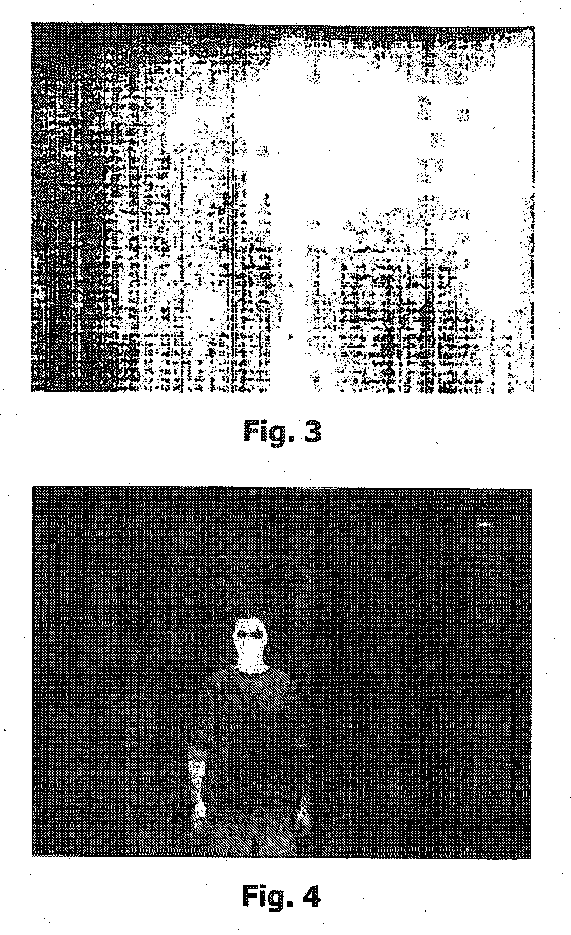

La figure 3 est une image d'une scène issue du détecteur sans apporter de correction. Comme on peut le constater, cette image est inexploitable, au moins visuellement. La figure 4 est une image de la même scène après application du procédé selon l'invention, les blocs noirs correspondant à des macropixels dans lesquels aucun mouvement n'a été détecté.

Comme on peut le constater, les macropixels au voisinage d'un macropixel dans lequel un mouvement a été détecté sont automatiquement lus en mode de haute résolution avec une correction selon l'invention.

Sans une telle caractéristique, les macropixels enregistrés pour servir de référence comprennent l'image de la cible en mouvement, image qui est ensuite retranchée des images brutes lues par la suite. Il peut ainsi apparaître des objets « fantômes » ou des phénomènes de traînée dans les images corrigées consécutives.

L'activation de la lecture en haute résolution d'un macropixel voisin à celui dans lequel un mouvement a été détecté (par exemple un voisinage de 3x3 ou 5x5 macropixels) a pour effet de mémoriser, pour ce macropixel voisin, un macropixel de référence qui ne comprend pas d'objet en mouvement. Le macropixel de référence mémorisé correspond ainsi uniquement au fond de la scène. Une fois la cible rentrée dans ce macropixel voisin, l'image corrigée obtenue pour celui-ci correspond donc sensiblement uniquement à l'image de la cible en mouvement. Il n'existe donc pas d'objet fantôme ou de phénomène de traînée. De proche en proche, étant donné le recentrage permanent de la fenêtre de haute résolution sur l'objet détecté et le passage en haute résolution des macropixels en amont du déplacement de l'objet (par le principe d'« éclairage » des macropixels voisins), il y a donc acquisition des références sans présence de l'objet dans les macropixels et donc une prévention d'apparitions d'objet fantôme.

Le renouvellement des macropixels de référence est ici assuré par le mouvement des cibles elles-mêmes. Ce mouvement implique une activation suffisamment régulière de la lecture en mode de haute résolution pour que les macropixels de référence mémorisés comprennent le bruit à l'instant effectif de la lecture en haute résolution.

En variante, il est également prévu de renouveler périodiquement les macropixels de référence, par exemple pour tenir compte de variations très rapides de la dispersion des caractéristiques de détection du détecteur. Cela peut être par exemple le cas si la scène observée est elle-même soumise à des variations de températures très rapides (comme par exemple l'entrée brusque d'un objet sensiblement plus chaud que le fond de la scène par exemple), ou que la technologie de fabrication du détecteur implique une telle variation rapide de dispersion.

Il a été décrit un mode de réalisation dans lequel les macropixels de références sont mémorisés sous forme analogique dans un circuit par exemple formé d'un banc de condensateurs, et dans lequel la différence analogique entre les macropixels venant d'être lus et les macropixels de référence est numérisée à l'aide d'un convertisseur analogique/numérique.

En variante, les macropixels de référence sont numérisés et stockés dans une mémoire numérique. De même les macropixels venant d'être lus sont numérisés et la différence entre ceux-ci et les macropixels de référence est réalisée sous forme numérique. Ceci permet notamment de s'affranchir de phénomènes de dérive dans le temps des valeurs des macropixels de référence usuellement observés lorsque la mémorisation est réalisée sous forme analogique (présence par exemple de fuite dans le banc de condensateurs utilisé pour le stockage analogique). La mémorisation sous format numérique des macropixels de référence est notamment utile lorsque l'objet stagne dans une partie de la scène observée, cas dans lequel le renouvellement des macropixels de référence est peu fréquent.

Bien qu'il ait été décrit une application à la détection infrarouge par l'utilisation de détecteurs bolométriques, la présente invention s'applique à tout type de détecteurs lus en sous-résolution et présentant une dispersion de leurs caractéristiques de détection.

Ainsi, la présente invention s'applique à la détection dans le domaine visible, par exemple au moyen d'un détecteur semi-conducteur photosensible (matrice de photodiodes ou matrice de phototransistors).

**Revendications**

**1.** Procédé de détection et de suivi d'objets dans un flux d'images délivrées par une matrice bidimensionnelle (12) de pixels d'un détecteur, ladite matrice étant organisée en blocs de pixels (16) formant macropixels, chaque macropixel pouvant être lu indépendamment l'un de l'autre selon un mode de haute résolution et/ou un mode de basse résolution, le mode de haute résolution consistant à lire chaque pixel du macropixel de manière à produire des valeurs de pixels individuelles, et le mode de basse résolution consistant à produire une unique valeur pour tous les pixels du macropixel, *caractérisé* **en ce qu'**il comporte:

■ une étape (50) de lecture en mode de basse résolution consistant à déterminer (en 52, 54) quels sont les macropixels de la matrice lus dans le mode de haute résolution et quels sont les macropixels de la matrice lus dans le mode de basse résolution uniquement :

○ en lisant (52) tous les macropixels de la matrice dans le mode de basse résolution ;
○ en détectant un mouvement dans les macropixels en fonction des valeurs desdits macropixels lues dans le mode de basse résolution ;
○ en activant ou en maintenant dans le mode de haute résolution les macropixels dans lesquels un mouvement est détecté ;
○ en activant le mode de haute résolution pour chaque macropixel dans lequel aucun mouvement n'est détecté et qui est dans un voisinage d'un macropixel dans lequel un mouvement est détecté ;
○ en activant ou en maintenant uniquement le mode de basse résolution pour les autres macropixels de la matrice ;

■ une étape (56) d'initialisation de correction consistant, lors de l'activation (en 54) du mode de lecture en haute résolution pour un macropixel, à lire (en 58) et à mémoriser (en 60) les valeurs individuelles des pixels de celui-ci, de manière à définir un macropixel de référence pour ledit macropixel; et
■ une étape (62) de lecture en mode de haute résolution consistant à :

○ lire (en 62) dans le mode de haute résolution les macropixels pour lesquels le mode de haute résolution est activé ;
○ corriger chaque valeur individuelle de pixel d'un macropixel lu dans le mode de haute résolution en formant la différence (en 66) entre ladite valeur individuelle et la valeur correspondante du macropixel de référence associé audit macropixel ; et
○ mémoriser et/ou afficher les valeurs individuelles de pixel corrigées des macropixels lus en mode de haute résolution

2. Procédé selon la revendication 1, *caractérisé* **en ce qu'**un mouvement est détecté dans un macropixel donné lorsque les valeurs relevées lors de deux lectures successives de ce macropixel en mode de basse résolution présentent une variation supérieure à un seuil prédéterminé.

3. Dispositif pour la détection et le suivi d'objets dans un flux d'images délivré par une matrice bidimensionnelle (12) de pixels d'un capteur d'image, ladite matrice étant organisée en blocs de pixels (16) formant macropixels, ledit capteur comprenant des moyens (10) pour lire chaque macropixel indépendamment l'un de l'autre selon un mode de haute résolution et/ou un mode de basse résolution, le mode de haute résolution consistant à lire chaque pixel du macropixel de manière à produire des valeurs de pixels individuelles, et le mode de basse résolution consistant à produire une unique valeur pour tous les pixels du macropixel, *caractérisé* **en ce que** le dispositif comporte :

■ des moyens (24) de lecture en mode de basse résolution aptes à déterminer quels sont les macropixels de la matrice lus dans le mode de haute résolution et quels sont les macropixels de la matrice lus dans le mode de basse résolution uniquement :

○ en lisant tous les macropixels de la matrices dans le mode de basse résolution ;
○ en détectant un mouvement dans les macropixels en fonction des valeurs desdits macropixels lues dans le mode de basse résolution ;
○ en activant ou en maintenant dans le mode de haute résolution les macropixels dans lesquels un mouvement est détecté ;
○ en activant le mode de haute résolution pour chaque macropixel dans lequel aucun mouvement n'est détecté et qui est dans un voisinage d'un macropixel dans lequel un mouvement est détecté ;
○ en activant ou en maintenant uniquement le mode de lecture en basse résolution pour les autres macropixels de la matrice ;

■ des moyens d'initialisation de correction aptes à, lors de l'activation du mode de lecture en haute résolution pour un macropixel, à lire et à mémoriser les valeurs individuelles des pixels de celui-ci, de manière à définir un macropixel de référence pour ledit macropixel ; et
■ des moyens de lecture en mode de haute résolution comprenant :

○ des moyens de lecture dans le mode de haute résolution des macropixels pour lesquels le mode de haute résolution est activé ;
○ des moyens aptes à corriger chaque valeur individuelle de pixel d'un macropixel lu dans le mode de haute résolution en formant la différence entre ladite valeur individuelle et la valeur correspondante du macropixel de référence associé audit macropixel ;
○ des moyens de mémorisation et/ou d'affichage des valeurs individuelles de pixels corrigées des macropixels lus en mode de haute résolution.

4. Dispositif selon la revendication 3, *caractérisé* **en**

**ce que** les moyens de correction (26, 28) sont réalisés sous forme analogique.

5. Dispositif selon la revendication 4, **caractérisé en ce qu'**il comporte des moyens (30) de conversion analogique/numérique de la différence formée.

6. Dispositif selon la revendication 3, **caractérisé en ce qu'**il comporte des moyens de conversion analogique/numérique des valeurs lues pour un pixel ou un macropixel.

7. Dispositif selon la revendication 6, *caractérisé* en ce lesdits moyens (26) aptes à mémoriser les valeurs des pixels d'un macropixel sont une mémoire numérique, et en ce que lesdits moyens (28) de formation de la différence sont constitués d'un circuit numérique.

**Patentansprüche**

1. Verfahren zur Erfassung und Nachverfolgung von Objekten in einem Bilderstrom, der von einer zweidimensionalen Matrix (12) von Pixeln eines Sensors geliefert wird, wobei die Matrix in Pixelblöcke (16) eingeteilt ist, die Makropixel bilden, wobei jedes Makropixel unabhängig voneinander gemäß einem Modus hoher Auflösung und/oder einem Modus geringer Auflösung ausgelesen werden kann, wobei der Modus hoher Auflösung darin besteht, jedes Pixel des Makropixels so auszulesen, dass einzelne Pixelwerte hergestellt werden, und der Modus geringer Auflösung darin besteht, einen einzigen Wert für alle Pixel des Makropixels herzustellen, **dadurch gekennzeichnet, dass** es umfasst:

> ■ einen Ausleseschritt (50) im Modus geringer Auflösung, der darin besteht, (in 52, 54) zu bestimmen, welche die Makropixel der Matrix sind, die im Modus hoher Auflösung ausgelesen werden, und welche die Makropixel der Matrix sind, die nur im Modus geringer Auflösung ausgelesen werden:
>
> > o wobei alle Makropixel der Matrix im Modus geringer Auflösung ausgelesen werden (52);
> > o wobei eine Bewegung in den Makropixeln in Abhängigkeit von den Werten der im Modus geringer Auflösung ausgelesenen Makropixel erfasst wird;
> > ○ wobei die Makropixel, in denen eine Bewegung erfasst wird, aktiviert oder im Modus hoher Auflösung gehalten werden;
> > ○ wobei der Modus hoher Auflösung für jedes Makropixel aktiviert wird, in dem keine Bewegung erfasst wird und das sich in einer Nachbarschaft eines Makropixels befindet, in dem eine Bewegung erfasst wird;
> > ○ wobei nur der Modus geringer Auflösung für die anderen Makropixel der Matrix aktiviert oder gehalten wird;
>
> ■ einen Korrekturinitialisierungsschritt (56), der darin besteht, bei der Aktivierung (in 54) des Auslesemodus in hoher Auflösung für ein Makropixel die einzelnen Werte der Pixel von diesem auszulesen (in 58) und zu speichern (in 60), um ein Referenzmakropixel für das Makropixel zu definieren; und
> ■ einen Ausleseschritt (62) im Modus hoher Auflösung, der darin besteht:
>
> > ○ im Modus hoher Auflösung die Makropixel auszulesen (in 62), für welche der Modus hoher Auflösung aktiviert ist;
> > ○ jeden einzelnen Pixelwert eines im Modus hoher Auflösung ausgelesenen Makropixels zu korrigieren, indem die Differenz zwischen dem Einzelwert und dem entsprechenden Wert des dem Makropixel zugeordneten Referenzmakropixels (in 66) gebildet wird; und
> > ○ die korrigierten einzelnen Pixelwerte der im Modus hoher Auflösung ausgelesenen Makropixel zu speichern und/oder anzuzeigen.

2. Verfahren nach Anspruch 1, **dadurch gekennzeichnet, dass** eine Bewegung in einem bestimmten Makropixel erfasst wird, wenn die Werte, die bei zwei aufeinanderfolgenden Auslesungen im Modus geringer Auflösung dieses Makropixels ermittelt wurden, eine Schwankung aufweisen, die größer ist als ein vorbestimmter Schwellenwert.

3. Vorrichtung zur Erfassung und Nachverfolgung von Objekten in einem Bilderstrom, der von einer zweidimensionalen Pixelmatrix (12) eines Bildsensors geliefert wird, wobei die Matrix in Pixelblöcke (16) eingeteilt ist, die Makropixel bilden, wobei der Sensor Einrichtungen (10) umfasst, um jedes Makropixel unabhängig voneinander gemäß einem Modus hoher Auflösung und/oder einem Modus geringer Auflösung auszulesen, wobei der Modus hoher Auflösung darin besteht, jedes Pixel des Makropixels so auszulesen, das einzelne Pixelwerte hergestellt werden, und der Modus geringer Auflösung darin besteht, einen einzigen Wert für alle Pixel des Makropixels herzustellen, **dadurch gekennzeichnet, dass** die Vorrichtung umfasst:

> ■ Einrichtungen (24) zum Auslesen im Modus geringer Auflösung, die geeignet sind, zu bestimmen, welche die Makropixel der Matrix sind, die im Modus hoher Auflösung ausgelesen werden, und welche die Makropixel der Matrix sind, die nur im Modus geringer Auflösung ausgelesen werden:

> ○ wobei alle Makropixel der Matrix im Modus geringer Auflösung ausgelesen werden;
> ○ wobei eine Bewegung in den Makropixeln in Abhängigkeit von den Werten der im Modus geringer Auflösung ausgelesenen Makropixel erfasst wird;
> ○ wobei die Makropixel, in denen eine Bewegung erfasst wird, aktiviert oder im Modus hoher Auflösung gehalten werden;
> ○ wobei der Modus hoher Auflösung für jedes Makropixel aktiviert wird, in dem keine Bewegung erfasst wird und das sich in einer Nachbarschaft eines Makropixels befindet, in dem eine Bewegung erfasst wird;
> ○ wobei nur der Modus geringer Auflösung für die anderen Makropixel der Matrix aktiviert oder gehalten wird;

■ Korrekturinitialisierungseinrichtungen, die geeignet sind, bei der Aktivierung des Auslesemodus in hoher Auflösung für ein Makropixel die einzelnen Werte der Pixel von diesem auszulesen und zu speichern, um ein Referenzmakropixel für das Makropixel zu definieren; und
■ Ausleseeinrichtungen im Modus hoher Auflösung, die umfassen:

> ○ Einrichtungen zum Auslesen der Makropixel im Modus hoher Auflösung, für welche der Modus hoher Auflösung aktiviert ist;
> ○ Einrichtungen, die geeignet sind, jeden einzelnen Pixelwert eines im Modus hoher Auflösung ausgelesenen Makropixels zu korrigieren, indem die Differenz zwischen dem Einzelwert und dem entsprechenden Wert des dem Makropixel zugeordneten Referenzmakropixels gebildet wird; und
> ○ Einrichtungen zum Speichern und/oder Anzeigen der korrigierten einzelnen Pixelwerte der im Modus hoher Auflösung ausgelesenen Makropixel.

**4.** Vorrichtung nach Anspruch 3, **dadurch gekennzeichnet, dass** die Korrektureinrichtungen (26, 28) in analoger Form realisiert sind.

**5.** Vorrichtung nach Anspruch 4, **dadurch gekennzeichnet, dass** sie Einrichtungen (30) zur analogen/digitalen Umwandlung der gebildeten Differenz umfasst.

**6.** Vorrichtung nach Anspruch 3, **dadurch gekenn-**

**zeichnet, dass** sie Einrichtungen zur analogen/digitalen Umwandlung der für ein Pixel oder ein Makropixel ausgelesenen Werte umfasst.

**7.** Vorrichtung nach Anspruch 6, **dadurch gekennzeichnet, dass** die Einrichtungen (26), die geeignet sind, die Werte der Pixel eines Makropixels zu speichern, ein digitaler Speicher sind, und dass die Einrichtungen (28) zum Bilden der Differenz aus einer digitalen Schaltung bestehen.

**Claims**

**1.** A method for detecting and tracking objects in a flow of images output by a two-dimensional matrix (12) of pixels of an image sensor, said matrix being organized in blocks of pixels (16) forming macropixels, each macropixel being readable independently of one another in high resolution mode and/or low resolution mode, the high resolution mode consisting in reading each pixel of the macropixel in order to produce individual pixel values, and the low resolution mode consisting in producing a single value for all the pixels of the macropixel, *characterized* in that it comprises:

> ■ a low resolution reading step (50) consisting in determining (in 52, 54) which macropixels of the matrix are red in the high resolution mode and which macropixels of the matrix are red in the low resolution mode only:
>
> > ○ by reading (52) every macropixel in the low resolution mode;
> > ○ by detecting a movement in the macropixels based on the values of said macropixels red in the low resolution mode;
> > ○ by activating or holding the high resolution mode for macropixels in which a movement is detected;
> > ○ by activating the high resolution mode for each micropixel in which no movement is detected and which is in a neighborhood of a micropixel in which a movement is detected;
> > ○ by activating or holding the low resolution mode for other macropixels of the matrix;
>
> ■ a correction initialization step (56) consisting, when activating (in 54) the high resolution mode for a macropixel, in reading (in 58) and memorizing (in 60) the individual values of the pixels thereof, in order to define a reference micropixel for said macropixel; and
> ■ a high resolution mode reading step (62) consisting:

○ in reading (in 62) in the high resolution mode the macropixels for which the high resolution mode is activated;

○ in correcting each individual pixel value of a macropixel red in the high resolution mode by forming the difference (in 66) between said individual value and the corresponding value of the reference macropixel associated to said macropixel; and

○ in storing and/or in displaying the corrected individual pixel values of the macropixels red in the high resolution mode.

2. The method as claimed in claim 1, *characterized* **in that** a movement is detected in a given macropixel when the values recorded in two successive readouts of this macropixel in low resolution mode display a variation greater than a predefined threshold.

3. A device for detecting and tracking objects in a flow of images output by a two-dimensional matrix of pixels (12) of an image sensor, said matrix being organized in blocks of pixels (16) forming macropixels, the device comprising means (20) for reading each macropixel independently of one another in high resolution mode and/or in low resolution mode, the high resolution mode consisting in reading each pixel of the macropixel in order to produce individual pixel values, and the low resolution mode consisting in producing a single value for all the pixels of the macropixel, *characterized* **in that** the device comprises:

■ a low resolution reading means (24) capable of determining which macropixels of the matrix are red in the high resolution mode and which macropixels of the matrix are red in the low resolution mode only:

○ by reading every macropixel in the low resolution mode;
○ by detecting a movement in the macropixels based on the values of said macropixels red in the low resolution mode;
○ by activating or holding the high resolution mode for macropixels in which a movement is detected;
○ by activating the high resolution mode for each micropixel in which no movement is detected and which is in a neighborhood of a micropixel in which a movement is detected;
○ by activating or holding the low resolution mode for other macropixels of the matrix;

■ correction initialization means capable, when activating the high resolution mode for a macopixel, of reading and memorizing the individual values of the pixels thereof, in order to define a reference micropixel for said macropixel; and

■ high resolution mode reading means comprising:

○ high resolution mode readout means of macropixels for which the high resolution mode is activated;
○ means capable of correcting each individual pixel value of a macropixel red in the high resolution mode by forming the difference between said individual value and the corresponding value of the reference macropixel associated to said macropixel; and
○ storing and/or displaying means of the corrected individual pixel values of the macropixels red in the high resolution mode.

4. A device as claimed in claim 3, *characterized* **in that** the correcting means (26, 28) are embodied in analog form.

5. A device as claimed in claim 4, *characterized* **in that** it comprises means (30) for analog-to-digital conversion of the difference formed.

6. A device as claimed in claim 3, *characterized* **in that** it comprises means for analog-to-digital conversion of the values read for a pixel or a macropixel.

7. A device as claimed in claim 6, *characterized* **in that** said means (26) for storing the values of the pixels of a macropixel are a digital memory, and **in that** said means (28) for forming the difference consist of a digital circuit.

Fig. 1

**Fig. 2**

**Fig. 3**

**Fig. 4**

## RÉFÉRENCES CITÉES DANS LA DESCRIPTION

**Documents brevets cités dans la description**

- US 20040095492 A
- US 20061119903 A

- JP 2004007098 A
- US 7106374 B

**Littérature non-brevet citée dans la description**

- **COULOMBE J.** Variable resolution CMOS current mode active pixel sensor. *Circuits and Systems, Proceedings,* 28 Mai 2000, vol. 2, 293-296